# EUROPÄISCHE PATENTANMELDUNG

(11) **EP 4 509 775 A1**
(43) Veröffentlichungstag der Anmeldung: **19.02.2025**
(21) Anmeldenummer: 24194018.8
(22) Anmeldetag: 12.08.2024
(51) Int. Cl.: F25B 39/02, F24F 1/00, F24F 11/41, F25B 47/00, F28F 17/00, F28F 19/00, F28F 27/00, F28F 99/00, G01K 17/00, G01K 17/04

(54) **WÄRMETAUSCHER FÜR EINE WÄRMEPUMPE, VERFAHREN ZUM ERKENNEN EINER VEREISUNG EINES WÄRMETAUSCHERS, WÄRMEPUMPENANLAGE UND COMPUTERPROGRAMMPRODUKT**

(30) Priorität: 14.08.2023 DE 102023121719
(71) Anmelder: Vaillant GmbH, 42859 Remscheid NRW (DE)
(72) Erfinder: Krampe-Zadler, Christof, 44628 Herne (DE)
(74) Vertreter: Popp, Carsten

(57) **Zusammenfassung**

Die Erfindung betrifft einen Wärmetauscher (9) für eine Wärmepumpenanlage (1), der zum Wärmeaustausch mit Umgebungsluft (17) eingerichtet ist, aufweisend mindestens einen kalorischen Sensor (19), der einen Wärmeübergang von einem ersten Heizelement (25) des kalorischen Sensors (19) zu einem Temperatursensor (28) des kalorischen Sensors (19) oder vom kalorischen Sensor (19) an die Umgebung zu erfassen kann. Zudem wird ein Verfahren zum Erkennen einer Vereisung (30) eines hier vorgeschlagenen Wärmetauschers (9) vorgeschlagen sowie eine Wärmepumpenanlage (1) und ein Computerprogrammprodukt.

## Beschreibung

Die Erfindung betrifft einen Wärmetauscher für eine Wärmepumpe, ein Verfahren zum Erkennen einer Vereisung eines Wärmetauschers, eine Wärmepumpenanlage und ein Computerprogrammprodukt.

Die Erfindung nimmt sich dem Problem einer Vereisung eines Wärmetauschers einer Wärmepumpe, die der Umgebungsluft Wärme entzieht, an. Der Wärmetauscher kann dabei mit einem Verdampfer einer Luft-Wärmepumpe in Wirkverbindung stehen. Dieser kann im Normalbetrieb der Umgebungsluft Wärme entziehen und zur Heizung eines Gebäudes und/oder zum Erwärmen von Brauchwasser nutzbar machen. Unter Umgebungsluft wird hier immer die Außenluft, außerhalb von Gebäuden verstanden, auch wenn der Verdampfer oder Wärmetauscher selbst in einem Gebäude, beispielsweise einem frostfreien Aufstellraum, angeordnet ist. Der Verdampfer oder Wärmetauscher wird auch in einem solchen Fall von Außenluft durchströmt, die über geeignete Strömungswege geleitet wird. Weiter betrifft die Erfindung ein Computerprogrammprodukt zur Ausführung eines Verfahrens zum Abtauen eines Verdampfers oder Wärmetauschers einer Luft-Wärmepumpe.

Ein Verdampfer einer Luft-Wärmepumpe wird im Normalbetrieb in seinem Inneren von einem sehr kalten Kältemittel, dessen Temperatur deutlich unter der der Umgebungsluft liegt, durchströmt, wobei der Umgebungsluft Wärme entzogen wird, wodurch das Kältemittel verdampfen kann und Wärme aufnimmt. Insbesondere Teile der Außenoberfläche des Verdampfers können dabei Temperaturen unterhalb des Gefrierpunktes von Wasser annehmen. Entsprechend gilt dies auch für andere Wärmetauscher, die beispielsweise Sole als Wärmeträgermedium nutzen.

Dadurch wird Feuchtigkeit aus der Luft (Wasserdampf) kondensiert und gefriert an diesen Teilen zu Wassereis. Dieses Eis behindert mit zunehmender Dicke den Wärmeaustausch und kann sogar zu mechanischen Schäden an dem Verdampfer bzw. Wärmetauscher führen. Es ist daher üblich, vereiste Verdampfer oder Wärmetauscher bei Bedarf oder periodisch abzutauen. Dazu kann beispielsweise eine Wärmepumpe in umgekehrter Richtung betrieben werden (sie arbeitet dann wie eine Klimaanlage oder ein Kühlschrank), wobei die Innenoberfläche des Verdampfers (der dann quasi als Kondensator dient) aufgeheizt wird und dadurch Eis auf seiner Außenoberfläche abtaut. Das Eis wandelt sich in flüssiges Wasser um, welches abtropft und abgeführt werden kann. Allerdings tritt eine Vereisung an der Umgebungsluft ausgesetzten Verdampfern oder Wärmetauschern besonders bei hoher relativer Luftfeuchte und entsprechenden Temperaturen auf, beispielsweise in einem Temperaturbereich von 0 Grad Celsius bis 6 Grad Celsius und hoher relativer Luftfeuchte. Dies erschwert das Abtauen, wobei ungünstige Windbedingungen (Richtung und Geschwindigkeit des Windes sind dabei wichtige Parameter) noch zusätzliche Schwierigkeiten bewirken können. Hierzu ist auch bekannt zusätzliche, in der Regel elektrische betriebene, Zusatzheizgeräte zum Abtauen vorzusehen. Ein Vereisen des Wärmetauschers kann dabei insbesondere an Lamellen des Wärmetauschers, die von der Umgebungsluft durchströmt werden, oder auch an einem gegebenenfalls vorhandenen, in Strömungsrichtung der Umgebungsluft dem Wärmetauscher vorgelagerten, Lufteintrittsgitter des Wärmetauschers auftreten.

Schwierig erscheint, eine Vereisung eines Wärmetauschers frühzeitig zu erkennen, insbesondere, bevor die Vereisung den Wärmeaustausch behindern kann. Dies könnte jedoch eine einfachere Enteisung ermöglichen, da die Durchströmbarkeit des Wärmetauschers zu einem frühen Zeitpunkt der Vereisung noch nicht eingeschränkt ist.

Beispielsweise aus der DE 33 28 532 A1 ist bekannt, als Maß für eine Auftreten einer Vereisung die Differenz der Temperatur der eintretenden Umgebungsluft und der Sauggastemperatur am Verdampfer heranzuziehen. Es hat sich allerdings gezeigt, dass diese Temperaturdifferenz für ein frühzeitiges Erkennen nicht geeignet ist. Auch kann eine Vereisung mittels des Kältemitteldruckes am Wärmetauscher oder über den Wirkungsgrad des Verdampfungsprozesses des Kältemittels erkannt werden.

Zudem wird eine erhöhte Leistungsaufnahme des Ventilators des Wärmetauschers zum Erkennen einer Vereisung genutzt. Diese tritt jedoch nachteilig erst bei einer erheblichen Vereisung auf, die den Strömungsweg der Umgebungsluft und damit den Wärmeaustausch bereits signifikant einschränkt.

Die bekannten Methoden ermöglichen nachteilig keine frühzeitige Erkennung einer beginnenden Vereisung des Wärmetauschers. Um einen dauerhaft effizienten Betrieb des Wärmetauschers und damit der Wärmpumpe zu ermöglichen, sollte eine auftretende Vereisung jedoch bereits in einem Anfangsstadium, in dem der Strömungsweg und der Wärmeaustausch noch nicht wesentlich eingeschränkt ist, erkannt werden.

Aufgabe der vorliegenden Erfindung ist daher, die mit Bezug auf den Stand der Technik geschilderten Probleme wenigstens teilweise zu lindern. Insbesondere soll die Erfindung einen Wärmetauscher und ein Verfahren zum Erkennen einer Vereisung an einem Wärmtauscher vorschlagen, die ein besonders frühzeitiges Erkennen der Vereisung ermöglichen, insbesondere, bevor eine Einschränkung des Wärmetransportes und der Durchströmbarkeit des Wärmetauschers auftritt. Die Erfindung soll dabei keine umfangreichen baulichen Änderungen an einem Wärmetauscher erfordern und nach Möglichkeit an bestehenden Geräten mit vertretbarem Aufwand nachrüstbar sein.

Diese Aufgaben werden gelöst durch die Merkmale der unabhängigen Patentansprüche. Weitere vorteilhafte Ausgestaltungen der hier vorgeschlagenen Lösung sind in den unabhängigen Patentansprüchen angegeben. Es wird darauf hingewiesen, dass die in den abhängigen Patentansprüchen aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Zur Lösung der Aufgabe wird ein Wärmetauscher für eine Wärmepumpenanlage vorgeschlagen, der zum Wärmeaustausch mit Umgebungsluft eingerichtet ist und einen Verdampfer der Wärmepumpenanlage umfasst. Der Wärmetauscher weist mindestens einen kalorischen Sensor auf, der dazu eingerichtet ist, einen Wärmeübergang von einem Heizelement des kalorischen Sensors zu einem Temperatursensor des kalorischen Sensors oder vom kalorischen Sensor an die Umgebung zu erfassen.

Bei der Wärmepumpenanlage kann es sich um eine bekannte Wärmepumpe zur Heizung oder Kühlung eines Gebäudes oder zur Bereitstellung von Warmwasser handeln bzw. kann diese eine solche Wärmepumpe umfassen. Die Wärmepumpe bzw. Wärmepumpenanlage kann dazu eingerichtet sein, der Umgebungsluft Wärme zu entziehen und über einen Kältekreis zu transportieren und nutzbar zu machen. In dem Kältekreis kann ein Kältemittel zirkulieren und in einem Verdampfer Wärme aufnehmen und in Verflüssiger abgeben. Im Kältekreis kann der Phasenübergang des Kältemittels in Verdampfer bzw. Verflüssiger durch einen Verdichter und ein Expansionsventil gesteuert werden. Bei einem Heizbetrieb der Wärmepumpe kann der Verdampfer der Umgebungsluft Wärme entziehen und zur Nutzung innerhalb des Gebäudes über den Verflüssiger bereitstellen. Hierzu kann ein weiterer, mit dem Verflüssiger in Wirkverbindung stehender Wärmetauscher die Wärme beispielsweise auf einen, in einem Heizkreis zirkulierenden, Wärmeträger oder einen Wärmespeicher, wie einen Warmwasserspeicher oder einen Pufferspeicher, übertragen. Der Verdampfer steht dabei mit einem hier vorgeschlagenen Wärmetauscher in Wirkverbindung bzw. ist ein Teil desselben.

Der Wärmetauscher kann eine Vielzahl von Lamellen zur Vergrößerung der, für den Wärmeaustausch zur Verfügung stehenden, Oberfläche aufweisen. Die Lamellen können dabei in wärmeleitender Verbindung mit einer vom Kältemittel durchströmten Leitung des Verdampfers stehen. Die Lamellen bzw. der Wärmetauscher können von einem Ventilator oder Gebläse angeströmt werden, um den Wärmeaustausch zu unterstützen. Die dem Wärmetauscher zuströmende Umgebungsluft kann dabei durch ein Lufteintrittsgitter zugeführt werden, das insbesondere Teil eines Gehäuses sein kann, in dem der Wärmetauscher angeordnet ist. Der Wärmetauscher kann beispielsweise Teil eines Außenteils einer Wärmepumpe sein.

Durch den Wärmeentzug kann die den Wärmetauscher durchströmende Umgebungsluft Luftfeuchtigkeit kondensieren und das Kondensat (Wasser) kann sich an Lamellen des Wärmetauschers oder des Lufteintrittsgitters anlagern und unter Umständen vereisen. Bei einem Fortschreiten der Vereisung kann der Strömungsweg der Umgebungsluft und damit auch der Wärmeaustausch eingeschränkt werden. Die Erfindung soll eine Möglichkeit eines frühzeitigen Erkennens einer Vereisung angeben.

Der kalorische Sensor kann nach einem kalorischen Messprinzip einen Wärmeübergang von mindestens einem ersten Heizelement des kalorischen Sensors zu mindestens einem Temperatursensor des kalorischen Sensors oder vom kalorischen Sensor, bzw. einem ersten Heizelement des kalorischen Sensors an die Umgebung erfassen.

Der Erfindung liegt insbesondere die Idee zu Grunde, dass der auftretende Wärmeübergang wesentlich von dem vorhandenen Umgebungsmedium abhängig ist und somit ein Erkennen des Umgebungsmediums ermöglicht wird. Insbesondere kann anhand des erfassten Wärmeüberganges erkannt werden, ob es sich bei dem Umgebungsmedium um Luft, Kondensat (Wasser) oder Eis handelt. Insofern kann der kalorische Sensor über eine Wärmequelle verfügen, um einen Wärmeübergang zu ermöglichen. Der Vorteil des Sensors liegt insbesondere in der Ermittlung des Taupunktes, bzw. der Detektion einer beginnenden Vereisung z. B. an einer Testoberfläche im/am Sensor, die die gleichen thermodynamischen Eigenschaften wie die Lamelle des Wärmetauschers innerhalb des Luftweges besitzt. Aufgrund der geringen Entfernung und gleichen thermodynamischen Bedingungen bei sehr geringer thermischer Masse ist eine echtzeitfähige Detektion der (beginnenden) Vereisung möglich. Hierzu ist es vorteilhaft, wenn der kalorische Sensor eine geringe Wärmekapazität und somit eine geringe thermische Trägheit aufweist.

Dabei kann ein Temperatursensor einen Sensor bezeichnen, der ein elektrisches Signal als Maß für die Temperatur liefert. Grundsätzlich können zur Ausführung der vorliegenden Erfindung beliebige Temperatursensoren zum Einsatz kommen, beispielhaft widerstandsbasierte Temperatursensoren, wie Heißleiter (NTC) oder Kaltleiter (PTC). Alternativ können auch aufwendigere Thermoelemente eingesetzt werden.

Gemäß einer Ausgestaltung können ein oder mehrere kalorische Sensoren am Wärmetauscher angeordnet sein. Insbesondere können ein oder mehrere kalorische Sensoren an Lamellen des Wärmetauschers und/ oder des Lufteintrittsgitters über den verfügbaren Strömungsquerschnitt des Wärmetauschers verteilt angeordnet sein, und so vorteilhaft auch eine lokale oder partielle Vereisung des Wärmetauschers erkannt werden.

Gemäß einer Ausgestaltung können mindestens ein kalorischer Sensor und mindestens ein zusätzlicher Temperatursensor über den Strömungsquerschnitt verteilt angeordnet sein. So kann aus dem Signal eines zusätzlichen Temperatursensors in Verbindung mit dem Signal des kalorischen Senors eine (partielle) Vereisung erkannt werden. Insbesondere kann mittig im Strömungsquerschnitt ein kalorischer Sensor und ein zusätzlicher Temperatursensor und in äußeren Bereichen des Strömungsquerschnitt (beispielsweise geodätisch oben, unten und beidseitig) jeweils ein zusätzlicher Temperatursensor angebracht sein. Ein zusätzlicher Temperatursensor kann dabei dazu eingerichtet sein, ein Signal einer absoluten Temperatur zu erfassen.

Gemäß einer Ausgestaltung kann mindestens ein kalorischer Sensor auf einem Substrat angeordnet sein, das eine möglichst geringe Wärmeleitfähigkeit und Wärmekapazität aufweist. Das Substrat kann dabei als eine Grundplatte verstanden werden, auf der der kalorische Sensor angeordnet ist und die aufgrund der geringen Wärmleitfähigkeit und Wärmekapazität den erfassbaren Wärmeübergang im kalorischen Sensor unterstützt. Die Wärmeleitfähigkeit und Wärmekapazität kann unterhalb jeweils eines Grenzwertes liegen. Der Grenzwert kann dabei eine Wärmeleitfähigkeit angeben, die einen nur unwesentlichen Wärmeübergang an das Substrat und damit die Befestigung des kalorischen Sensors und damit einen nur unwesentlichen Einfluss auf die Erfassung eines Wärmeüberganges durch oder auf das Umgebungsmedium ausübt. Zudem sollte das Substrat ein möglichst konstantes Verhalten gegenüber Wasser haben, also die Einwirkung von Wasser keine Veränderungen (beispielsweise kein Quellen) am Substrat hervorrufen. Beispielhaft kann Glas als Material für das Substrat geeignet sein.

Gemäß einer Ausgestaltung kann das Substrat eine Verlängerung einer Lamelle des Wärmetauschers oder des Lufteintrittsgitters bilden. Das Substrat kann dann eine thermisch leitende Verbindung zur Lamelle dienen. Vorteilhaft sind bei dieser Ausgestaltung die Anströmverhältnisse identisch zu einer Lamelle. Weiterhin voreilhaft ermöglicht diese Ausgestaltung ein Bestimmen einer Vereisungs- bzw. Kondensationsrate (oder auch -gradienten) durch mehrfaches Trocknen des kalorischen Sensors.

Gemäß einer Ausgestaltung kann der mindestens eine kalorische Sensor mindestens ein zweites Heizelement umfassen, das dazu eingerichtet ist, am kalorischen Sensor angelagertes Kondensat und/ oder Eis durch Einwirkung von Wärme zu entfernen. Beispielsweise kann das mindestens eine zweite Heizelement auf der, dem kalorischen Sensor abgewandten, Seite, des Heizelementes angeordnet sein. Das mindestens eine zweite Heizelement kann nach einem Erkennen von Kondensat oder Eis, dieses entfernen und somit eine Detektionsfähigkeit des kalorischen Sensors wiederherstellen. Alternativ oder kumulativ kann auch ein Betreiben des mindestens einen ersten Heizelementes mit gesteigerter Heizleistung zu einem Entfernen von angelagertem Kondensat und/ oder Eis beitragen.

Bei dem mindestens einen ersten oder zweiten Heizelement kann es sich insbesondere um ein widerstandsbasiertes elektrisches Heizelement handeln, das elektrischen Strom in Wärme umwandeln kann.

Gemäß einer Ausgestaltung kann der kalorische Sensor ein oder mehrere erste Heizelemente umfassen, die benachbart zu mindestens einem Temperatursensor angeordnet sind, und dabei mindestens einen Zwischenraum zu dem mindestens einen Temperatursensor bilden. In dem gebildeten Zwischenraum kann sich Kondensat und/ oder Eis anlagern. Ein Anlagern von Kondensat und/ oder Eis im Zwischenraum kann die Wärmeleitfähigkeit des Zwischenraumes erheblich steigern, was zu einer erfassbaren Erhöhung des Wärmestromes/ Wärmeüberganges von einem ersten Heizelement zu dem mindestens einen Temperatursensor führt. Diese Erhöhung des Wärmestromes wäre somit durch eine Erhöhung der Temperatur des mindestens einen Temperatursensors erfassbar. Bei einer derartigen Ausgestaltung kann eine hohe Genauigkeit bei einem definierten, geringen und konstanten Abstand zwischen erstem Heizelement und Temperatursensor erreicht werden, insbesondere verbunden mit einer Anordnung auf einem Substrat. Beispielsweise wäre eine Anordnung von einem zwei oder vier quadratischen Heizelementen äquidistant zu einem mittig angeordneten Temperatursensor möglich. Alternativ könnte auch ein Heizelement mit einem kreisförmigen Ausschnitt einen kreisförmigen Temperatursensor umschließen. Als geeigneter Abstand zwischen dem mindestens einen ersten Heizelement und dem mindestens einen Temperatursensor hat sich ein Bereich von 0,02 Millimeter bis 2 Millimeter oder auch bis 5 Millimeter, in Abhängigkeit des konkreten Aufbaus des kalorischen Sensors herausgestellt. Die 0,02 Millimeter können beispielsweise bei einer Integration auf einem Chip und 2 Millimeter bei einem Aufbau aus diskreten SMD(Surface Mounted Device)- oder THT(Through-Hole-Technology)- Bauteilen beispielsweise auf einem PCB (Printed Surface Board) geeignet sein. Eine hohe Wärmeleitung bzw. eine hohe Wärmekapazität des Substrates kann dabei eine Detektion einer Vereisung bzw. Kondensation erschweren, aufgrund eines, zu dem zu erfassenden Wärmeüberganges, zusätzlichen thermischen Pfades. Die Empfindlichkeit der Erfassung kann somit nachteilig sinken. Dies kann insbesondere bei einem kalorischen Sensor, bei dem erstes Heizelement und Temperatursensor in einem Bauteil integriert sind.

Gemäß einer Ausgestaltung können auch erstes Heizelement und Temperatursensor in ein Bauteil integriert sein. Hierbei kann ein widerstandsbasierter Temperatursensor mit elektrischem Strom beaufschlagt werden und dessen Widerstand als Maß für die Temperatur erfasst werden. Bei einer Anlagerung von Wasser oder Eis am Sensor kann durch eine erhöhte Wärmeübertragung an die Umgebung eine geminderte Temperatur des Temperatursensors erfasst werden. Hierzu haben sich SMD (Surface Mount Device)-Widerstände mit kleiner Bauform (insbesondere mit einer Kantenlänge kleiner 5 Millimeter, bevorzugt unterhalb von 2 Millimeter) bewährt. Bei einem SMD-Widerstand handelt es sich um ein leitfähiges elektronisches Bauteil zur Oberflächenmontage, dass an zumindest zwei Seiten leitfähige Kanten zur Kontaktierung aufweist. Beispiele für geeignete SMD-Widerstände sind beispielsweise ein SMD-Widerstand mit dem Code 03015 mit einer Größe von 0,3 Millimetern [mm] x 0,15 mm oder auch mit dem Code 0201 und einer Größe von 0,25 mm x 0,125 mm.

Zur Lösung der Aufgabe wird auch ein Verfahren zum Erkennen einer Vereisung eines Wärmetauschers vorgeschlagen, bei dem mindestens ein erstes Heizelement des kalorischen Sensors mit einem elektrischen Strom beaufschlagt und ein elektrischer Widerstand mindestens eines Temperatursensors erfasst wird. Das Verfahren ermöglicht ein Erfassen des Wärmeüberganges von einem ersten Heizelement zu einem Temperatursensor oder von dem kalorischen Sensor an die Umgebung. Hierbei kann angelagertes Eis oder Kondensat in einem Zwischenraum zwischen erstem Heizelement und Temperatursensor oder am kalorischen Sensor erkannt und unterschieden werden. Das Verfahren kann insbesondere dauerhaft bzw. permanent während des Betriebes des Wärmetauschers bzw. einer verbundenen Wärmepumpenanlage durchgeführt werden. Voreilhaft kann das Verfahren vollständig automatisiert, beispielsweise von einem Regel- und Steuergerät einer Wärmepumpe bzw. Wärmepumpenanlage durchgeführt werden.

Gemäß einer Ausgestaltung des Verfahrens kann das mindestens eine erste Heizelement mit einem modulierten Eingangssignal betrieben und ein Ausgangssignal am Temperatursensor erfasst werden. Anhand einer Phasenverschiebung zwischen Eingangssignal und Ausgangssignal und/ oder einer Amplitudenänderung kann erkannt und unterschieden werden, ob Eis oder Wasser am kalorischen Sensor angelagert ist. Zur Auswertung kann insbesondere die 3-Omega-Methode zur Bestimmung der Wärmeleitfähigkeit von Volumenmaterial zum Einsatz kommen. Als Eingangssignal kann beispielhaft ein periodisches Signal moduliert werden, beispielsweise eine Kreisfrequenz (Sinusschwingung). Entsprechend kann sich mit einer Phasenverschiebung eine Widerstandsmodulation des Temperatursensors einstellen. In der am Temperatursensor gemessenen Spannung Um kann sich eine dritte Harmonische der Modulationsfrequenz des ersten Heizelementes einstellen. Aus der Amplitude der dritten Harmonischen Um(3ω) bei wechselnder Modulationsfrequenz des ersten Heizelementes kann die Wärmeleitfähigkeit zwischen erstem Heizelement und Temperatursensor abgeleitet werden, die es ermöglicht zwischen in flüssiger Phase vorliegendem Kondensat (Wasser) und in fester Phase vorliegendem Eis zu unterscheiden. Zwischen der anregenden thermischen Schwingung des ersten Heizelementes und der Antwort durch die Widerstandsfunktion des Temperatursensors als Ausgangsfunktion stellt sich eine zeitliche Phasendifferenz aufgrund der zeitlichen Verzögerung der thermischen Leitung ein. Dabei kann die Spannung Uₘ^{(3ω)} kann als komplexe Größe dargestellt werden. Real- und Imaginärteil von Uₘ^{(3ω)} gegen die Anregungsfrequenz des Eingangssignals aufgetragen, können zur Unterscheidung des Phasenzustandes (fest, flüssig) des im Zwischenraum von erstem Heizelement und Temperatursensor oder am kalorischen Sensor angelagerten Wassers genutzt werden. Diese Ausgestaltung kann auch mit einem kalorischen Sensor, bei dem erstes Heizelement und Temperatursensor in einem Bauteil integriert sind, angewendet werden.

Gemäß einer Ausgestaltung kann durch ein mehrmaliges Trocknen bzw. Enteisen des kalorischen Sensors (durch Inbetriebnahme der ersten bzw. insbesondere zweiten Heizelemente) ein Gradient der Vereisung bzw. der Kondensation (auch als Vereisungs- oder Kondensationsrate bezeichnet) ermittelt werden. Vorteilhaft kann so eine besonders ein geeigneter Zeitpunkt für ein Initiieren eines Enteisungsvorganges des Wärmetauschers bzw. des Lufteintrittsgitters bestimmt werden.

Alternativ oder kumulativ können erfasste Widerstandswerte des Temperatursensor, bzw. am Temperatursensor gemessene Spannungswerte mit vorgegebenen Referenzwerten verglichen werden und anhand des Vergleiches ein Vereisen des Wärmetauschers erkannt werden. Hierzu können zudem Betriebsparameter des Wärmetauschers oder Umgebungsparameter einbezogen werden, beispielsweise eine Eingangstemperatur des Kältemittels am Verdampfer des Wärmetauschers, eine Temperatur der Umgebungsluft und/ oder eine Drehzahl eines Ventilators, der einen, den Wärmetauscher durchströmenden Luftstrom, fördert. Insofern können die Referenzwerte auch als Referenzkennfeld vorliegen.

Gemäß einer Ausgestaltung kann bei einem Erkennen von Eis im Rahmen der Durchführung von einem hier vorgeschlagenen Verfahren ein Enteisungsvorgang eingeleitet werden. Hierfür können bekannte Verfahren zur Enteisung eines Wärmetauschers zum Einsatz kommen, beispielsweise eine Umkehrung des Kältekreises, so dass im Wärmetauscher Wärme abgegeben wird und die Vereisung abschmelzen und abfließen kann. Gegebenenfalls kann hierzu die Strömungsrichtung eines Ventilators umgekehrt werden, so dass durch den Wärmetauscher erwärmte Luft auch einem Lufteintrittsgitter zugeführt wird. Alternativ oder kumulativ kann ein, beispielsweise elektrischer, Zusatzheizer in Betrieb genommen werden, der Wärme erzeugt und der Vereisung des Wärmetauschers zuführt. Besonders vorteilhaft erfordert die frühzeitige Erkennung einer Vereisung des Wärmetauschers nur einen kurzen Enteisungsvorgang. Hierzu kann gegebenenfalls ausschließlich ein elektrischer Zusatzheizer genutzt werden, wodurch der Normalbetrieb der Wärmepumpenanlage nicht oder nur minimal beeinflusst werden muss.

Alterativ oder kumulativ kann bei einem Erkennen einer Vereisung das mindestens eine zweite Heizelement in Betrieb genommen werden, bis kein angelagertes Eis und/ oder Wasser am kalorischen Sensor erkannt wird und der kalorische Sensor somit wieder detektionsfähig ist.

Nach einem weiteren Aspekt der Erfindung wird auch eine Wärmepumpenanlage vorgeschlagen, aufweisend einen hier vorgeschlagenen Wärmetauscher. Die Wärmepumpenanlage kann eine Wärmepumpe umfassen und insbesondere zur Wärmeversorgung eines Gebäudes eingerichtet sein, also zur Verfügungstellung von Heizungswärme und/ oder Warmwasser. Der hier vorgeschlagenen Wärmetauscher kann insbesondere mit einem Verdampfer in Wirkverbindung stehen und dazu eingerichtet sein, Umgebungsluft Wärme zu entziehen. Hierzu kann dieser in einem Außenteil der Wärmepumpenanlage angeordnet sein. Die Wärmepumpenanlage kann ein Regel- und Steuergerät umfassen, dass zur Durchführung eines hier vorgeschlagenen Verfahrens eingerichtet ist. Hierzu kann das Regel- und Steuergerät einen Prozessor zur Datenverarbeitung aufweisen und/ oder über diesen verfügen. Zudem kann das Regel- und Steuergerät einen Speicher aufweisen bzw. auf diesen zugreifen, auf dem Daten zur Durchführung eines hier vorgeschlagenen Verfahrens hinterlegt sind oder werden.

Nach einem weiteren Aspekt wird auch ein Computerprogrammprodukt vorgeschlagen, welches Befehle umfasst, die eine hier vorgeschlagene Wärmepumpenanlage dazu veranlassen, ein hier vorgestelltes Verfahren (zumindest teilweise) durchzuführen. Dies betrifft mit anderen Worten insbesondere ein Computerprogramm (-produkt), umfassend Befehle, die bei der Ausführung des Programms durch einen Computer, diesen veranlassen, ein hier vorgeschlagenes Verfahren auszuführen. Das Computerprogramm kann insbesondere auf einem Regel- und Steuergerät einer hier vorgeschlagenen Wärmepumpenanlage durchgeführt werden.

Nach einem weiteren Aspekt wird auch ein computerlesbares Speichermedium vorgeschlagen, auf dem ein hier vorgeschlagenes Computerprogrammprodukt gespeichert ist.

Die im Zusammenhang mit dem Wärmetauscher erörterten Details, Merkmale und vorteilhaften Ausgestaltungen können entsprechend auch bei dem hier vorgestellten Verfahren, der Wärmepumpenanlage als auch dem Computerprogrammprodukt auftreten und umgekehrt. Insoweit wird auf die dortigen Ausführungen zur näheren Charakterisierung der Merkmale vollumfänglich Bezug genommen.

Hier werden somit ein Wärmetauscher für eine Wärmepumpe, ein Verfahren zum Erkennen einer Vereisung eines Wärmetauschers, eine Wärmepumpenanlage und ein Computerprogrammprodukt angegeben, welche die mit Bezug auf den Stand der Technik geschilderten Probleme zumindest teilweise lösen. Insbesondere tragen der Wärmetauscher, das Verfahren und das Computerprogramm dazu bei, eine Vereisung eines Wärmetauschers besonders frühzeitig zu erkennen, bevor diese die Durchströmbarkeit bzw. den Wärmetransport des Wärmetauschers einschränken können. Besonders vorteilhaft ist zu einem derartig frühen Zeitpunkt der Vereisung auch nur ein sehr kurzer Enteisungsvorgang notwendig und der Normalbetrieb des Wärmetauschers bzw. der Wärmepumpenanlage wird nur minimal beeinträchtigt. Mögliche, verfahrensbedingte Komforteinbußen für Nutzer können vorteilhaft in einem kaum oder nicht wahrnehmbaren Bereich gehalten werden. Zudem können die Wärmeverluste für einen Enteisungsvorgang in einem sehr geringen Rahmen gehalten werden.

Zudem kann ein hier vorgeschlagener Wärmetauscher einfach hergerichtet werden, da einem herkömmlichen Wärmetauscher lediglich an geeigneter Position mindestens ein kalorischer Sensor zuzufügen ist. Insofern ist die Erfindung besonders vorteilhaft auch zur Nachrüstung an bestehenden Wärmepumpenanlagen geeignet.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: ein hier vorgeschlagenes Heizgerät in einem Raum, und
- Fig. 2:: einen hier vorgeschlagenen Wärmetauscher,
- Fig. 3:: einen Strömungsquerschnitt eines hier vorgeschlagenen Wärmetauschers,
- Fig. 4:: einen kalorischen Sensor,
- Fig. 5:: den kalorischen Sensor aufweisend eine Vereisung, und
- Fig 6:: eine alternative Ausgestaltung eines kalorischen Sensors.

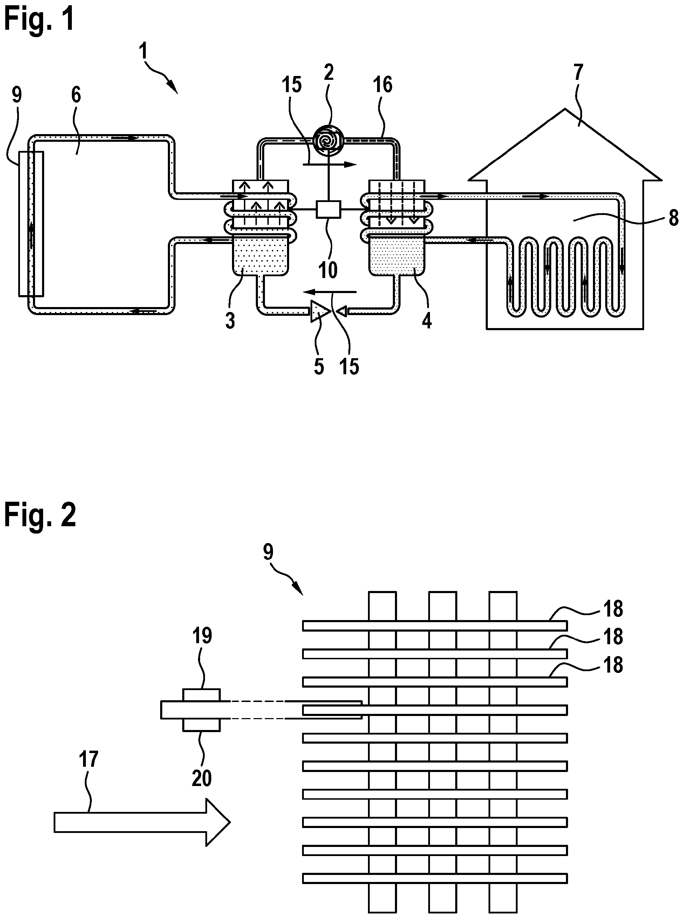

Fig. 1 zeigt beispielhaft und schematisch eine hier vorgestellte Wärmepumpenanlage 1 zur Versorgung eines Gebäudes 7 mit Wärmeenergie. Die Wärmepumpenanlage 1 kann ein Außenteil 6, das der Umgebungsluft Wärme entzieht, und ein Innenteil 8 zur Abgabe der aufgenommenen Wärme in das Gebäude 7 umfassen. In einem Kältekreis 16 kann hierzu ein Kältemittel umgewälzt werden, das in einem Verdampfer 3 des Kältekreises 16 verdampfen und in einem Verflüssiger (Kondensator) 4 des Kältekreises 16 verflüssigt werden kann. Zudem können in dem Kältekreis 16 ein Verdichter 2 (auch als Kompressor bezeichnet) und ein Expansionsventil 5 vorgesehen sein, wobei der Verdichter 2 durch einen Elektromotor angetrieben werden kann. Das Expansionsventil 5 kann eine einstellbare Öffnungsweite aufweisen, die motorisch, beispielsweise mittels eines Schrittmotors, ansteuerbar sein kann. Das Kältemittel kann im Kältekreis 16 in einer Umwälzrichtung 15 vom Verdampfer 3 über den Verdichter 2 zum Verflüssiger 4 und weiter über das Expansionsventil 5 zurück zum Verdampfer 3 transportiert werden.

Das Klimagerät 1 kann ein Regel- und Steuergerät 10 umfassen, das dazu eingerichtet ist, den Kältekreis 16 zu regeln. Das Regel- und Steuergerät 10 kann zudem dazu eingerichtet sein, ein hier vorgeschlagenes Verfahren auszuführen.

Fig. 2 zeigt gleichfalls beispielhaft und schematisch einen hier vorgeschlagenen Wärmetauscher 9. Dieser kann Lamellen 18 umfassen, die von Umgebungsluft 17 durchströmt und zwischen denen sich bei einer Vereisung 30 Eis ansammeln und den Strömungsweg 22 blockieren kann. An einer Lamellen 18 kann ein kalorischer Sensor 19 und in unmittelbarer Nähe mindestens ein zweites Heizelement 20 angeordnet sein.

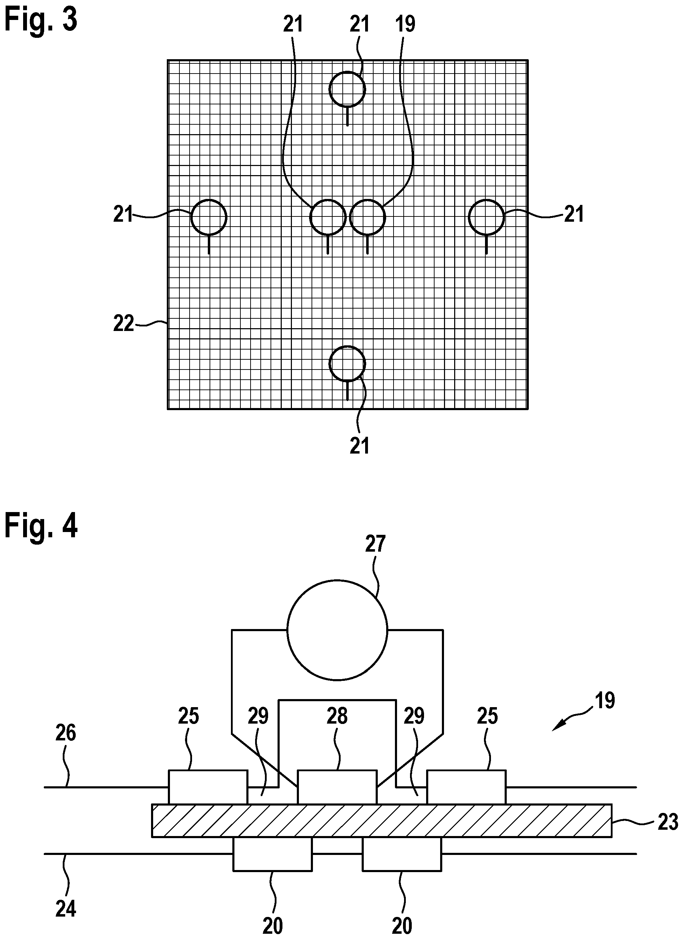

Fig. 3 zeigt beispielhaft und schematisch den Strömungsweg 22 eines hier vorgeschlagenen Wärmetauschers 9. Als beispielhafte Anordnung kann dieser mittig einen kalorischen Sensor 19 und einen zusätzlichen Temperatursensor 21, sowie geodätisch oben unten und beidseitig einen weiteren zusätzlichen Temperatursensor 21. Diese Anordnung von kalorischem Sensor 19 und zusätzlichen Temperatursensoren 21 ermöglicht eine Erkennung auch von partiellen Vereisungen 30 des Wärmetauschers 9.

Fig. 4 zeigt eine nähere Darstellung eines kalorischen Sensors 19. Dieser kann einen Temperatursensor 28 und mindestens zwei erste Heizelemente 25 umfassen, die derart räumlich getrennt angeordnet sind, dass sich zwischen Temperatursensor 28 und ersten Heizelementen 25 ein definierter Zwischenraum 29 ausbildet, der für sich bildendes Kondensat zugänglich ist. Der gesamte Aufbau des kalorischen Sensors 19 ist weitestgehend ideal thermisch an die Lamelle 18 angekoppelt. Erste Heizelementen 25 und der Temperatursensor 28 können dabei auch einem Substrat 23 angeordnet sein, dass eine geringe Wärmeleitfähigkeit aufweist. Auf der dem Temperatursensor 28 und den ersten Heizelementen 25 abgewandten Seite des Substrates 23 können zweite Heizelemente 20 wärmeleitend mit dem Substrat 23 verbunden sein und einen Heizstrom 24 in Wärme umwandeln, um das Substrat 23 sowie den Zwischenraum 29 von einer Vereisung 30 bzw. Wasser zu befreien. Die ersten Heizelemente 25 können von einem Heizstrom 26 durchströmt werden und diesen in Wärme umwandeln. Dabei stellt sich ein Wärmestrom durch den Zwischenraum 29 zum Temperatursensor 28 ein, der diesen auf eine Temperatur erwärmt, die anhand einer am Temperatursensor 28 abfallenden Spannung 27 erfassbar ist. Mit anderen Worten stellt sich ein Wärmestrom zwischen dem mindestens einen ersten Heizelement 25 und dem mindestens einen Temperatursensor 28 ein, der zu einer Temperaturüberhöhung des mindestens einen Temperatursensors 28 führt, wobei die Temperaturüberhöhung von den thermischen Eigenschaften des Mediums im Zwischenraum 29 abhängig ist. Für den Fall, dass der Temperatursensor 28 ein widerstandbasierter Temperatursensor 28 ist, kann dieser mit einem kontanten (amplitudenkonstanten) Strom beaufschlagt werden, der einen Spannungsabfall erzeugt und somit durch die Abhängigkeit des Widerstandes vom Temperatursensor 28 von dessen Temperatur ein der Temperatur des Temperatursensors 28 korrelierendes Spannungssignal desselben erzeugt.

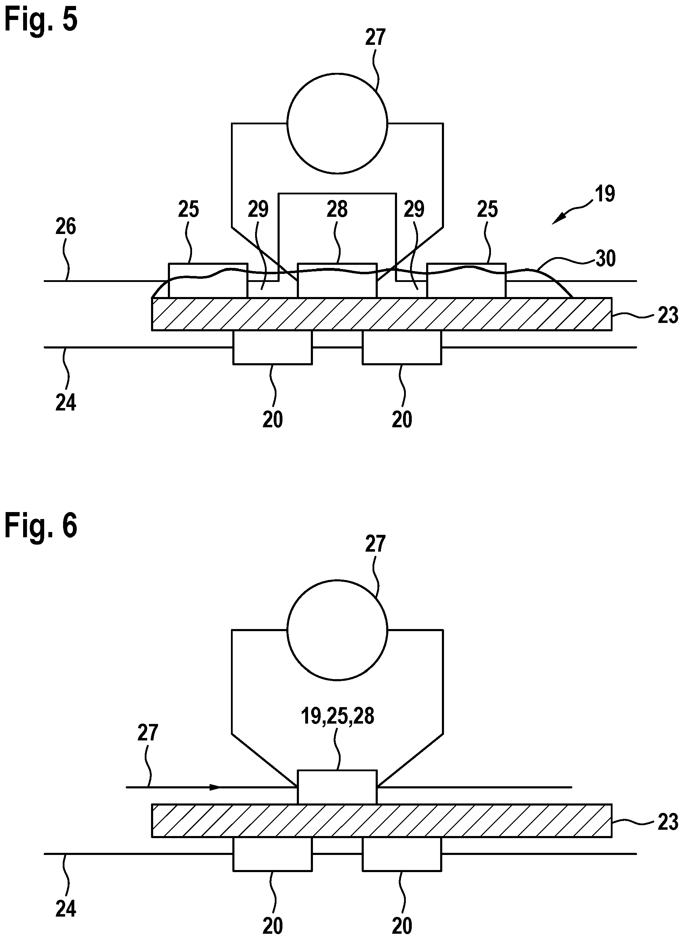

Wenn nun, wie in Fig. 5 gezeigt, eine Vereisung 30 im Zwischenraum 29 auftritt, wird die Wärmeleitfähigkeit des Zwischenraumes 29 signifikant beeinflusst und kann im Rahmen der Durchführung eines hier vorgeschlagenen Verfahrens anhand der am Temperatursensor 28 abfallenden Spannung 27 erkannt werden. Der in Fig. 4 und 5 gezeigte Aufbau funktioniert sehr gut bei sehr geringen Abständen zwischen dem mindestens einen ersten Heizelement 25 und dem mindestens einen Temperatursensor 28 aufgrund der zeitlichen Dilatation der Wärmeleitung. Hierzu kann ein integrierter Aufbau auf dem Substrat 23 beitragen, beispielsweise durch strukturierte Metalllagen auf Glas. Dabei kann der Temperatursensor 28 und das mindestens eine erste Heizelement 25 aus einer Struktur bzw. einer Metallisierung auf beispielsweise einem Substrat 23 aus Glas bestehen.

Gemäß einer Ausgestaltung eines hier vorgeschlagenen Verfahrens kann der Heizstrom 26 der ersten Heizelemente 25 mit einer Eingangsfunktion moduliert werden, beispielsweise mit einer Kreisfunktion. In Folge werden die ersten Heizelemente 25 auf eine entsprechende Temperatur erwärmt. Die Spannung des Temperatursensors 28 kann als Ausgangsfunktion erfasst werden. Anhand der auftretenden Phasenverschiebung und einer Amplitudenänderung zwischen Eingangs- und Ausgangsfunktion (Eingangs- und Ausgangssignal) kann festgestellt werden, ob im Zwischenraum 29 Wasser in flüssiger oder fester Phase angelagert ist.

Fig. 6 zeigt eine alternative, integrierte Ausgestaltung des kalorischen Sensors 19, bei dem erstes Heizelement 25 und Temperatursensor 28 als ein Bauteil, beispielsweise als SMD-Widerstand ausgeführt ist. Bei dieser Ausgestaltung kann der Wärmeübergang vom integrierten kalorischen Sensor 19 auf die Umgebung erfasst werden, der sich bei einem Anlagern von Wasser am integrierten kalorischen Sensor 19 signifikant ändert, erfassen. Hierzu kann ein elektrischer Strom am integrierten kalorischen Sensor 19 eingeprägt werden und die abfallende elektrische Spannung erfasst werden. Der Widerstandswert (bestimmt durch Spannung und Widerstand) des integrierten kalorischen Sensors 19 stellt sich durch ein Gleichgewicht zwischen zugeführter elektrischer Energie und der abgeführten Wärmeenergie ein, die vom umgebenden Medium abhängig ist.

### Bezugszeichenliste

- 1: Wärmepumpenanlage
- 2: Verdichter
- 3: Verdampfer
- 4: Verflüssiger
- 5: Expansionsventil
- 6: Außenteil
- 7: Gebäude
- 8: Innenteil
- 9: Wärmetauscher
- 10: Regel- und Steuergerät
- 15: Umwälzrichtung
- 16: Kältekreis
- 17: Umgebungsluft
- 18: Lamelle
- 19: kalorischer Sensor
- 20: zweites Heizelement
- 21: zusätzlicher Temperatursensor
- 22: Strömungsweg
- 23: Substrat
- 24: Heizstrom zweite Heizelemente
- 25: erstes Heizelement
- 26: Heizstrom erstes Heizelement
- 27: Spannung Temperatursensor
- 28: Temperatursensor
- 29: Zwischenraum
- 30: Vereisung

## Patentansprüche

1. Wärmetauscher (9) für eine Wärmepumpenanlage (1), der zum Wärmeaustausch mit Umgebungsluft (17) eingerichtet ist und einen Verdampfer der Wärmepumpenanlage (1) umfasst, aufweisend mindestens einen kalorischen Sensor (19), der dazu eingerichtet ist, einen Wärmeübergang von einem ersten Heizelement (25) des kalorischen Sensors (19) zu einem Temperatursensor (28) des kalorischen Sensors (19) oder vom kalorischen Sensor (19) an die Umgebung zu erfassen.

2. Wärmetauscher (9) nach Anspruch 1, wobei mindestens ein kalorischer Sensor (19) an einer Lamelle (18) des Wärmetauschers (9) und/ oder eines Lufteinlassgitters des Wärmetauschers (9) angeordnet ist.

3. Wärmetauscher (9) nach einem der vorangehenden Ansprüche, wobei am Wärmetauscher (9) mindestens ein kalorischer Sensor (19) und mindestens ein zusätzlicher Temperatursensor (21) angeordnet ist.

4. Wärmetauscher (9) nach einem der vorangehenden Ansprüche, wobei der kalorische Sensor (19) mindestens ein zweites Heizelement (20) umfasst, das dazu eingerichtet ist, am kalorischen Sensor (19) angelagertes Kondensat und/ oder Eis durch Einwirkung von Wärme zu entfernen.

5. Wärmetauscher (9) nach einem der vorangehenden Ansprüche, wobei der kalorische Sensor (19) mindestens ein erstes Heizelement (25) umfasst, das benachbart zu mindestens einem Temperatursensor (28) angeordnet ist und dabei mindestens einen Zwischenraum (29) zum Temperatursensor (28) bildet, in dem sich Kondensat und/ oder Eis anlagern kann.

6. Wärmetauscher (9) nach einem der Ansprüche 1 bis 4, wobei der kalorische Sensor (19) einen Temperatursensor (28) umfasst, der dazu eingerichtet ist, mit einem elektrischen Heizstrom (26) beaufschlagt zu werden und gleichzeitig den elektrischen Widerstand desselben bzw. eine am Temperatursensor (28) abfallende elektrische Spannung zu erfassen.

7. Verfahren zum Erkennen einer Vereisung (30) eines Wärmetauschers (9) nach einem der vorangehenden Ansprüche, wobei mindestens ein erstes Heizelement (25) des kalorischen Sensors (19) mit einem elektrischen Heizstrom (26) beaufschlagt und ein elektrischer Widerstand eines Temperatursensors (28) und/ oder eine am Temperatursensor (28) abfallende elektrische Spannung (27) erfasst wird.

8. Verfahren nach Anspruch 7 zum Erkennen einer Vereisung (30) eines Wärmetauschers (9) nach einem der Ansprüche 1 bis 6, wobei mindestens ein erstes Heizelement (25) mit einem modulierten Eingangssignal betrieben und ein Ausgangssignal am Temperatursensor (28) erfasst wird, und weiter anhand einer Phasenverschiebung zwischen Eingangssignal und Ausgangssogmal und/ oder einer Amplitudenänderung erkannt wird, ob Eis oder Wasser am kalorischen Sensor (19) angelagert ist.

9. Verfahren nach einem der Ansprüche 7 oder 8, wobei bei einem Erkennen von Eis ein Enteisungsvorgang eingeleitet wird und/ oder mindestens ein zweites Heizelement (20) in Betrieb genommen wird.

10. Verfahren nach einem der Ansprüche 7 bis 9, wobei mehrmalig nach einem Erkennen von Eis oder Kondensat an dem kalorischen Sensor (19) ein Trocknungs- oder Enteisungsvorgang initiiert wird und ein Gradient einer Vereisung bzw. einer Kondensation ermittelt wird.

11. Wärmepumpenanlage (1), umfassend einen Wärmetauscher (9) nach einem der Ansprüche 1 bis 6 sowie Mittel zur Durchführung eines Verfahrens nach einem der Ansprüche 7 bis 10.

12. Computerprogrammprodukt, umfassend Befehle, die eine Wärmepumpenanlage (1) nach Anspruch 11 dazu veranlassen, ein Verfahren nach einem der Ansprüche 7 bis 10 auszuführen.
